# EUROPEAN PATENT APPLICATION

(11) **EP 0 558 053 A1**
(43) Date of publication of application: **01.09.1993**
(21) Application number: 93103096.9
(22) Date of filing: 26.02.1993
(51) Int. Cl.: F01D 5/00

(54) **Turbine blade repair**

(30) Priority: 27.02.1992 GB 9204233; 03.10.1992 GB 9220868
(71) Applicant: TURBINE BLADING LIMITED, Shipston-on-Stour, Warwickshire CV36 4BL (GB)
(72) Inventor: Fraser, Michael James, Cheltenham, Gloucestershire, GL51 5UL (GB)
(74) Representative: Symes, Christopher A.

(57) **Abstract**

A method of repairing a turbine blade (10) comprises removing damaged material (22) from an area (30) to be repaired, applying by welding a layer of a first material in the form of a soft metal (31) such as Inconel and subsequently applying a layer of second material in the form of a hard metal (36) such as Stellite, the blade may then be worked by machining, grinding or polishing to the desired profile (35,40) and subjected to a heat treatment process for stress relief. The repair method enables a fast repair that can be carried out without the blade (10) being removed from the rotor (13) or stator and which is economical in use of materials.

## Description

The present invention relates to the repair of turbine blades which may be stator blades or rotor blades primarily for use in steam turbines. However it is envisaged that the repair method of the present invention may also be used for repair to gas turbine engines.

In a steam turbine it is the outer end of the turbine blade that during use of the turbine is most prone to damage either from impact with solid particles or water droplets. Impact with water droplets or wet steam tends to occur in the later stages of the turbine i.e. the lower pressure end beyond what is known as the Wilson line where the steam has cooled and hence water condenses more readily.

A combination of the chemicals the water and the stresses to which the blades are subjected can lead to an effect known as stress corrosion cracking which can have a pronounced deleterious effect on a blade particularly if there is any flaw or transitional weakness present in the blade.

In the high pressure stages of the turbine particles carried in the steam from the boiler may be responsible for erosion of the leading edges of the turbine blades.

It is usually the outer end of the turbine blades which are most prone to damage in view of their greater linear speed and hence the speed of impact with wet steam or particles as the case may be is considerably greater than at the inner end of the turbine blades. This is emphasized particularly towards the low pressure ends of the turbine since the blades tend to be of considerable length.

In order to combat the effects of erosion at the leading edge of the turbine blades it has been known to fit shields of hard material such as Stellite and applicants have proposed various repair methods including the welding to the blade of a hard material such as Stellite or a high carbon steel heat treatment to achieve a hardness harder than the normal metal of the turbine blade which is typically 12% chrome steel. It has also been proposed to have inserts made from material similar to that of the blade material but which has been at least in part treated to harden the material. These methods are disclosed in much greater detail in the following British publications: 2,19,8667; 2,227,190 and 2,229,944.

The methods proposed by the applicants have been found to be very satisfactory. However applicants have found that in order to virtually eliminate stress in the blade after repair has been carried out the repair methods have to be carried out under very carefully controlled conditions and any member interconnecting blades such as snubbers, lacing wires, shrouds etc should be removed before any substantial heat input such as occurs during welding is carried out otherwise a concentration of stress is likely to arise which is almost impossible to eliminate by normal heat treatment process. Applicants have found by a combination of heating and cooling and in some cases pre-distorting, excellent repairs can be achieved leaving the blade in as good if not better condition than the originally manufactured blade.

Because of the high cost of material such as Stellite, and in view of the care and time that has to be taken including removal of lacing wires holes, redrilling etc, even though an excellent repair may be carried out, the cost can be considerable and the time taken to carry out such repair to such a high standard may entail the turbine being out of commission for a longer period than is desired.

It would be desirable therefore in some cases to have a method of repair that enables a blade to be repaired satisfactorily but more quickly and relatively economically.

It is an object of the present invention to provide a new method of repairing turbines.

According to one aspect of the present invention we provide a method of repairing a turbine blade comprising the steps of removing damaged material from an area of the turbine blade to be repaired, providing new metal in the area of said repair, carrying out a stress relieving heat treatment process on the turbine blade and working, where necessary, by machining, grinding or polishing the repaired area to achieve the desired blade profile, characterised in that the application of new metal comprises the steps of:-
(a) providing a layer of a first metallic material by welding over said repair area;
(b) providing a layer of a second metallic material over said layer of first material, said second material being harder than said first material;
(c) said second layer of material being applied in a manner so as not to extend over an area greater than or beyond the edge of said first layer of material.

Preferably both said layer of first material and said layer of second material are applied to the blade in a manner so as to reduce as far as possible heat input to the blade and the temperature of the blade may be continuously monitored to ensure that the temperature of certain parts of the blade do not rise above a predetermined figure.

Preferably said layer of first material comprises Inconel.

Preferably said layer of second material is harder than the material from which the blade is made.

Preferably said layer of second material comprises Stellite.

It is envisaged that to maintain the temperature of the repair area as low as possible it is envisaged that more than one turbine blade may be repaired at one time so that for example a weld run having a part of said layers of first or second material may be applied to one blade and then a weld run to another to allow the first blade to cool before a subsequent weld run is applied.

It is further envisaged that in order to ensure that sensitive parts of the blade do not rise above a predetermined temperature for example lacing wire holes, snubbers and tenons to which shrouds are secured, heat conductive means such as a chill may be applied to ensure that the temperature around such sensitive areas is kept to a minimum.

Whereas it is envisaged that the repair of the present invention can most efficiently be carried out without the need to remove shrouds, lacing wires etc., it is envisaged that is some circumstances removal of lacing wires and filling of the holes may be necessary. Furthermore in some cases removal of the shroud and separation of snubbers may also be necessary.

The removal of a shroud and subsequent replacement with a new shroud can be a time consuming and complicated operation and can increase the likelihood of damage to the turbine blade in the area of the tenons to which the shroud is attached. It is envisaged therefore that according to another aspect of the invention, if it is desired, in the case where blades are tied together by shrouds to free a blade to be repaired by cutting the shroud and, after the repair and heat treatment processes have been carried out subsequently remaking the shroud by welding or by any other suitable means. The cut and rewelding of the shroud preferably takes place at a position mid-point between two blades such that the heat input generated during the welding operation is as far away as possible from the two adjacent blades thereby minimising heat input to the area of the blade around the tenon.

An unexpected advantage has been found in carrying out repairs according to the present invention in that the layers of material applied by welding appears to a certain extent to be under compression after cooling of the blade which has been found to decrease the likelihood of crack propagation and hence enhances the life of the repaired area.

The method of the present invention may also include the steps of experimenting on a turbine blade to determine the best pattern of welding so as to minimise excessive temperature gradient and distortion and propagation of heat to sensitive areas and, a satisfactory weld pattern has been determined carrying out repair processes on each blade in the turbine to be repaired in accordance with an optimum pattern.

Preferably the experimental blade is a blade of identical type but not one that is actually attached to the turbine to be repaired. The experimental blade may however be secured in a manner so as to simulate attachment to other blades by for example shrouds, lacing wires etc., so as to establish a proper control.

Preferably the method of the present invention includes analysis and testing of the repaired area and it is envisaged that this may include x-raying and hardness testing so as to establish that a proper repair has been achieved and that the blade is left in a stress free condition as possible.

It is further envisaged that the blade may be deliberately pre-distorted to counteract any distortion that is expected to occur during the repair process so that after the repair and any heat treatment processes the blade is left in not only a stress free condition but also in its proper position relative to the position of a datum blade so that all the turbine blades in the array may have properly aligned leading and trailing edges.

It is further envisaged that clamp means may be used during the repair method to hold the leading or the trailing edge of the blade in a set position. However in many cases where shrouding is still in position on the blade such means may not be necessary.

In some cases of particularly thin blades a single pass may be all that is required to achieve said layer of second material over the layer of said first material that has already been applied. In other cases more than one pass may be necessary and where this is the case, second and subsequent passes may be applied after a predetermined cooling period and furthermore may not necessarily be applied in the same direction as the original pass.

Whereas it is believed that the "cast" metal applied by welding may not be as durable as a piece of forged material connected by welding to a blade the considerable decrease in time necessary to carry out the repair and the combination of a layer of soft first material covered by a layer of hard second material has resulted in a swift and relatively economical repair. The blade may be machined and/or polished to its correct form.

Where one preferred method of the invention is laying of very hard metal, such as Stellite, on the layer of soft metal which, as mentioned above can be Inconel, the hard metal may be some other alternative perhaps not as hard as Stellite but which may be subsequently treated, for example a high carbon steel could be heat treated to provide the desired hardness, or alternatively a hard alloy powder may be applied by a plasma transfer process.

In the case of a plasma deposition, which layer of material would be very thin, the polishing of the surface of the repaired blade should be carried out before the plasma deposition since otherwise polishing after plasma deposition is likely to remove the deposited hard alloy.

The present invention will now be described in more detail by way of example only with reference to the accompanying drawings wherein:
FIGURE 1 is a diagrammatic view of three turbine blades in an array of blades;
FIGURE 2 is a cross-section of one of the blades shown in Figure 1;
FIGURE 3 is a cross-section of a blade shown in Figure 2 after removal of damaged material;
FIGURE 4 is the blade shown in Figure 3 after application of a layer of first soft material;
FIGURE 5 is a view of the blade shown in Figure 4;
FIGURE 6 is a cross-section of the blade after machining of the first layer of soft material;
FIGURE 7 is a view of the blade after application of the second layer of material;
FIGURE 8 is a cross-section of the blade shown in Figure 7; and
FIGURES 9 and 10 are views of the repaired blade.

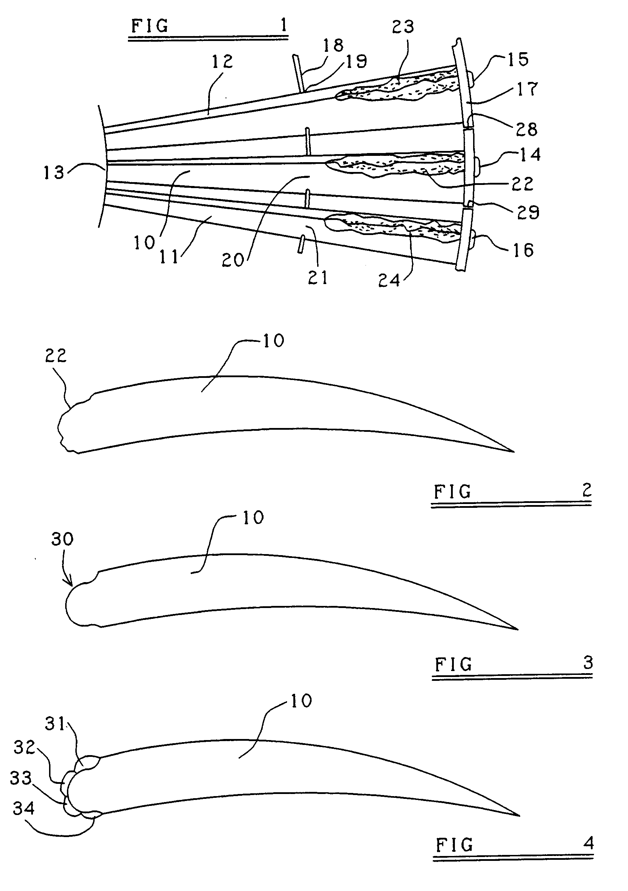

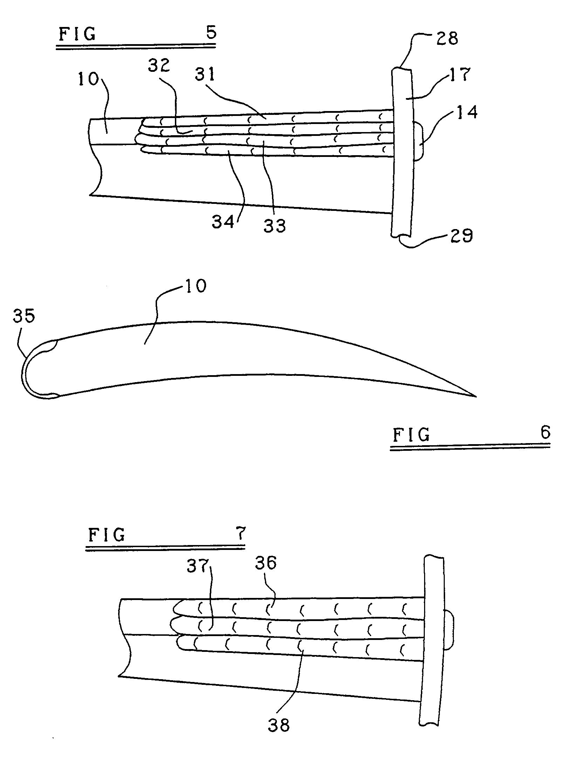

Referring first to Figure 1, three turbine blades are shown 10, 11 and 12, each blade having a root portion attached to a rotor 13.

The outer ends of each blade have respective tenons 14, 15 and 16 which extend through apertures in a shroud 17 by means of which the blades 10, 11 and 12 are connected to each other. Further connection means are provided by a lacing wire 18 passing through holes 19, 20 at 21, the shroud 17 and lacing wire 18 collectively damping vibration of the blades and relative movement between adjacent blades.

As has been explained before, damage occurs primarily to the outer leading edge of the turbine blades, the damaged areas being indicated in Figure 1 at areas 22, 23 and 24. The damage may take the form of small cracks and erosion which if left can result in large cracks which eventually may necessitate the complete replacement of the blade.

Referring now to Figure 2 a profile of a blade 10 is shown and the area of damage 22 is indicated and as it can be seen it is primarily on the leading edge. The remainder of the blade normally being relatively unaffected by wear.

In order to remove damaged material the blade 10 may be ground such that the damaged material is removed as shown in Figure 3. By grinding away the damaged material any evidence of substantial cracks may be discovered and appropriate action taken to repair such cracks.

In the example shown in the drawing the area of damage extends up to the shroud 17 and thus the heat input in the region of the tenon 14 may cause considerable strain to be applied to the tenon 14 in view of the presence of the shroud 17 which would restrain any tendency for movement caused by the considerable input of heat during a welding operation.

The shroud is therefore cut at positions 28 and 29 thus allowing the end of the blade 10 to move thus alleviating any stress that may be applied to the tenon 14.

A first layer of material comprising a soft metal is then applied to the ground area 30 of the blade, the soft metal for example Inconel may be applied to the blade in runs along the length of the blade and in the example shown four runs are shown 31, 32, 33 and 34. In some cases depending on the amount of damage, a single run may suffice, in other cases it may be necessary to apply more runs.

Depending on how many runs of soft metal have to be applied to the blade it may then be necessary to work the soft metal to leave a substantially even layer or in some cases it may be preferred to leave the soft metal unworked.

Figure 6 shows the blade 10 in which the soft metal runs 31, 32, 33 and 34 have been worked to leave a substantially constant thickness of soft metal as shown at 35 ready to receive a layer of second material comprising a hard metal.

Referring now to Figures 7 and 8, hard metal in the form of three weld passes 36, 37 and 38 is shown having been applied to the soft metal 35. The hard metal for example Stellite, as is the case with the soft metal may not have all three runs applied at the same time but there may be some time delay between the application of each run so that the temperature of the blade 10 is not unduly raised. As has afore been explained there may also be heat sinks or chills provided to limit the temperature of the blade in the vicinity of a lacing wire hole such as that shown at 20 for example.

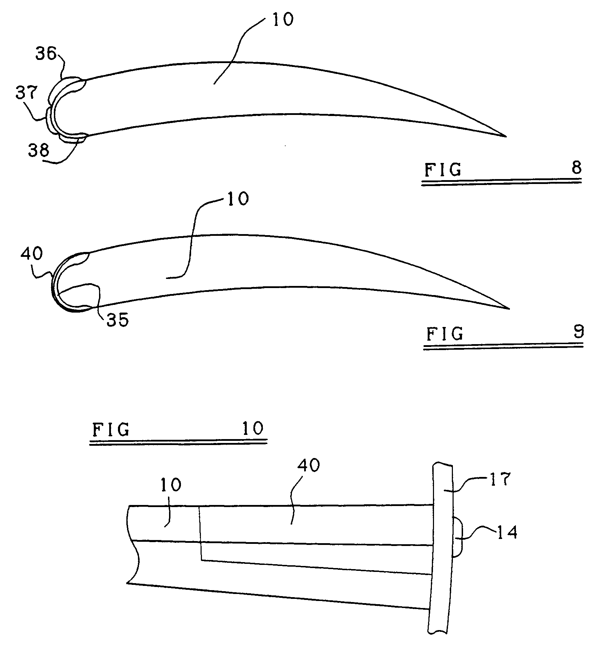

The hard metal "runs" 36, 37 and 38 are then machined so that the repaired blade as shown in Figure 9 and Figure 10 is left with a predetermined desired profile having a soft metal layer 35 and a hard metal layer 40 to provide a leading edge portion of the blade that is durable and hence provides a long service life compared with a blade without such a hardened area.

After the application of the hard metal 36, 37 and 38 and before or after machining the blade may be subjected to stress relieving heat treatment process which may comprise for example raising the blade to a predetermined temperature over a certain length of the time, maintaining the blade at that temperature and then allowing the blade to cool in a controlled manner. If required more than one stress relieving heat treatment process may be applied. After heat treatment and machining the shroud which had been cut at 28 and 29 may be remade by welding for example. However if the adjacent blades such as those shown at 11 and 12 also require repair the reconnection of the shroud will only take place after such repair and heat treatment processes have been carried out.

It is envisaged that during the repair process or before the repair process if it is known what distortion is likely to occur to the blade during the repair procedure some compensating force or heat differential may be applied to the blade such that after repair the blade is in as near as possible its proper aligned position. It is further envisaged that guide means or clamp means may be applied to the blade being repaired to maintain the leading edge or the trailing edge in its proper position whilst permitting of movement of the trailing edge or leading edge respectively so as not to encourage the build up of stress in the blade during any welding process.

Whereas in the example shown the shroud has been cut to prevent the possibility of undue stress being applied to the tenon, in some cases it may not be necessary to cut the shroud and the application of a chill to the area of the tenon may prevent excessive build tip of temperature in that area and hence reduce the risk of stress in the tenon.

Furthermore by careful application of metal coupled with the application of heating means and cooling means carefully applied to the blade it may be that the transference of heat to the area of the tenon or for example a lacing wire hole may be such that the risk of damage occurring through in built stress is minimal. However such factors will be determined by the size and nature of the blade, the amount of welding to be carried out and the proximity of the weld area to the tenons and/or lacing wire hole.

Whereas the second hard layer of material has been described as a layer of Stellite, alternative materials may be used, e.g. a high carbon steel which may subsequently be heat hardened.

Alternatively the second layer of material may be a metal which can be subjected to plasma hardening. In this case, it is necessary to machine the blade to the desired profile prior to the application of plasma hardening since the depth of hardness may not cope with any substantial machining thereafter.

The features disclosed in the foregoing description, or the following claims, or the accompanying drawings, expressed in their specific forms or in terms of a means for performing the disclosed function, or a method or process for attaining the disclosed result, as appropriate, may, separately or in any combination of such features, be utilised for realising the invention in diverse forms thereof.

## Claims

1. A method of repairing a turbine blade (10) comprising the steps of removing damaged material from an area (22) of the turbine blade to be repaired, providing new metal (31,34) in the area of said repair, carrying out a stress relieving heat treatment process on the turbine blade (10) and working, where necessary, by machining, grinding or polishing the repaired area to achieve the desired blade profile, characterised in that the application of new metal comprises the steps of:-
(a) providing a layer of a first metallic material (31,34) by welding over said repair area (22);
(b) providing a layer of a second metallic material (36,38) over said layer of first material (31,34), said second material (36,38) being harder than said first material (31,34);
(c) said second layer of material (36,38) being applied in a manner so as not to extend over an area greater than or beyond the edge of said first layer of material (31,34);

2. The method according to Claim 1 characterised in that said second material (36,38) is also harder than the material from which the blade (10) is made.

3. The method according to Claim 1 or Claim 2 characterised in that said first material (31,34) is softer than the material from which the blade (10) is made.

4. The method according to any one of the preceding claims characterised in that said second material (36,38) is hardened subsequent to it being applied to said layer of first material (31,34).

5. The method according to any one of Claims 1 to 3 characterised in that said layer of second material is applied by plasma deposition.

6. The method according to any one of Claims 1 to 3 characterised in that said second layer of material comprises Stellite (36,38).

7. The method according to any one of Claims 1 to 3 characterised in that said first layer of material comprises Inconel (31,34).

8. The method according to any one of the preceding claims characterised in that chills or other means of conducting heat is applied in areas of discontinuity (19,20,21) in the blade (10) during said repair.

9. The method according to any one of the preceding claims characterised in that the turbine blades (10,11,12) are provided with means (17) for connecting adjacent blades and characterised in that prior to the application of said first (31,34) and second (36,38) layers of material at least some of said means (17) are cut (28,29) or otherwise removed or separated to disconnect said connecting means (17).

10. The method of repairing a turbine blade characterised in that said method includes any novel step or novel combination of steps as described herein and/or illustrated in the accompanying drawings.
